## Europäisches Patentamt
## European Patent Office
## Office européen des brevets

(19)

(11) Veröffentlichungsnummer: **0 210 192**
**B1**

(12) **EUROPÄISCHE PATENTSCHRIFT**

(45) Veröffentlichungstag der Patentschrift: **13.06.90**

(21) Anmeldenummer: **86900597.5**

(22) Anmeldetag: **15.01.86**

(86) Internationale Anmeldenummer:
**PCT/CH86/00005**

(87) Internationale Veröffentlichungsnummer:
**WO 86/04464 31.07.86 Gazette 86/17**

(51) Int. Cl.⁵: **H 02 H 9/00**, G 05 F 1/44,
H 02 J 3/01, H 02 J 3/28

(54) **EINRICHTUNG ZUR FILTRIERUNG UND TRANSIENTEN STABILISIERUNG DER NETZSPANNUNG.**

(30) Priorität: **21.01.85 CH 251/85**

(43) Veröffentlichungstag der Anmeldung:
**04.02.87 Patentblatt 87/06**

(45) Bekanntmachung des Hinweises auf die
Patenterteilung:
**13.06.90 Patentblatt 90/24**

(84) Benannte Vertragsstaaten:
**AT CH DE FR GB IT LI NL SE**

(56) Entgegenhaltungen:
**FR-A-2 466 138**
**GB-A-1 551 089**

(73) Patentinhaber: **JOHO, Reinhard**
**Lärchenstrasse 9**
**CH-5024 Küttigen (CH)**

(72) Erfinder: **JOHO, Reinhard**
**Lärchenstrasse 9**
**CH-5024 Küttigen (CH)**

## Beschreibung

Die Erfindung betrifft eine Einrichtung zur transienten Stabilisierung der Netzspannung mit gleichzeitiger Herausfiltrierung von unerwünschten Oberschwingungen und Einzelimpulsen aus dem Soll-Spannungsverlauf. Die Einrichtung gehört zu der Kategorie der in Netzknotenpunkten und Verbraucherzentren zum Netz parallelgeschalteten Einrichtungen. Unter Netzen werden im folgenden nur Wechselspannungsnetze verstanden.

In zunehmendem Masse werden Netze von öffentlicher und privater Versorgung durch verschiedenartige Ursachen gestört. Genannt seien die kurzzeitigen Spannungseinbrüche beim Anlauf von Motoren, die sich durch störendes Flackern von Beleuchtungsanlagen auswirkten. Eine andere Kategorie von Störern sind die stark im zunehmen begriffenen halbleitergesteuerten Stromverbraucher und Stromerzeugungsanlagen, die die Netzspannung verzerren und in an das selbe Netz angeschlossenen Verbrauchern, wie Fernsehgeräten und Computern sowie in Rundsteuersignalempfängern Störungen bewirken.

Eine Versteifung des Netzes durch Verkleinerung der Zuleitungsimpedanz mittels verteilten verbrauchernahen Umspannungstransformatoren bringt eine Verbesserung, aber unter sehr grossem Aufwand. Zudem ist diese Methode bei kleinen Netzen im Inselbetrieb wegen der grossen Innenimpedanz des Generators selbst nicht anwendbar. Ein Anschluss der zu schützenden Verbraucher über batteriegepufferte Umformersysteme bringt zwar eine Entkopplung vom gestörten Netz, der Aufwand für netz- und verbraucherseitige Oberschwingungsfreiheit und für die Wartung der Einrichtung ist aber sehr gross. Sogenannte magnetische Spannungskonstanthalter sorgen zwar für konstante Spannung, kurze transiente Spannungseinbrüche sind damit aber nicht gänzlich zu vermeiden, die Oberschwingungsunterdrückung ist nicht gewährleistet; ferner besteht Resonanzgefahr mit Netzreaktanzen. Parallelkondensatoren und LC-Filter ergeben zwar wirksame Oberschwingungsunterdrückung, die Anlagen belasten aber das Netz strommässig. Für die Rundsteuerfrequenzen sind teure Bandsperren nötig, ferner besteht auch hier Gefahr von Resonanz bei Wechselwirkung mit Netzreaktanzen. Aufgabe der Erfindung ist es gegenüber diesem Stand der Technik eine vollelektronische Einrichtung zu schaffen, die eine trägheitslose transiente Spannungsstabilisierung mit einer Filterung der Netzspannung verbindet und bei ungestörtem Netz dieses strommässig praktisch nicht belastet.

Diese Aufgabe wird durch die in den Patentansprüchen 1 und 2 gekennzeichneten Einrichtungen gelöst.

Vorteilhafte Ausgestaltungen der Erfindung sind in den Unteransprüchen gekennzeichnet.

Kernstück dieser Einrichtung ist die niederimpedante transformatorlose Führung der Netzspannung über Querfeldtransistoren und niederimpedante Gleichspannungs-Energiequellen.

Die mit der erfindungsgemässen Einrichtung erzielbaren Vorteile liegen in der überraschenden vorteilhaften Kombination von

a) Spannungsstabilisierung bezüglich kurzzeitigen steilen Einbrüchen und Ueberhöhungen der Netzspannung ohne gleichzeitige Strombelastung des Netzes durch die Einrichtung selbst

b) dosierbare und trägheitslose Ansprechcharakteristik zur Unterdrückung von Oberschwingungen und Einzelimpulsen jeglicher Art

c) einer einfachen Bypassvorrichtung für beliebig viele Rundsteuerfrequenzen

d) einer praktisch verschwindenden Leistungsaufnahme bei ungestörtem Netz.

Im folgenden wird die Erfindung anhand der Beschreibung und von Ausführungsbeispielen näher erläutert.

Fig. 1 enthält eine Schaltungsanordnung für eine Einrichtung gemäss Patentanspruch 1.

Fig. 2 enthält eine Schaltungsanordnung für eine Einrichtung gemäss Patentanspruch 2

Fig. 3 zeigt die prinzipielle Wirkungsweise des Ansprechverhaltens der Schaltungsanordnungen gemäss Fig. 1 und 2.

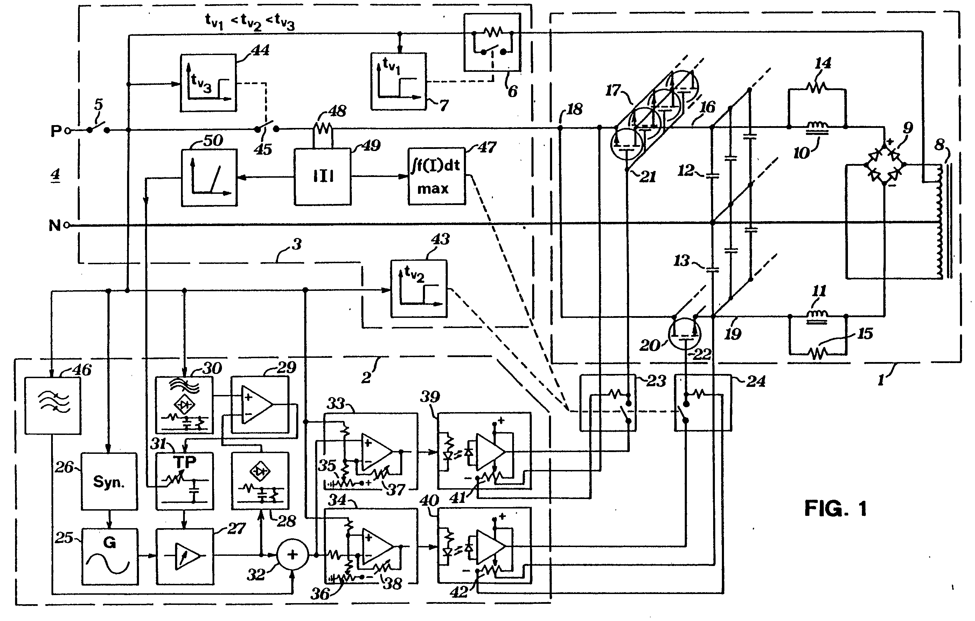

Die Schaltungsanordnung nach Fig. 1 ist unterteilt in einen Leistungselektronikteil 1, einen Ansteuerelektronikteil 2 und einen Ueberwachungsteil 3. Der Netzanschluss 4 ist durch einen ersten und zweiten Leiter, beispielsweise den Nulleiter N und den Polleiter P gekennzeichnet.

Bei Einschalten des Schalters 5 wird die Netzspannung für den Ansteuerelektronikteil 2 und den Ueberwachungsteil 3 freigegeben. Ueber ein einschaltstromstossbegrenzendes Glied 6 mit dem Zeitverzögerungsglied 7 wird ein Autotransformator 8 angespeist der über die Gleichrichterbrücke 9 eine positive und negative Spannung bezüglich dem Nulleiter N aufbaut. Nach einer Glättung über die Drossel 10 im positiven und 11 im negativen Zweig werden die Kondensatorbatterien 12 bzw. 13 aufgeladen, und zwar wegen der Widerstände 14 und 15 auf den Wert der Scheitelspannung der Transformator-Sekundärwicklung. In den positiven Zweig 16 ist eine Parallelschaltung von n-Kanal-Querfeldtransistoren 17 über die Anode angeschlossen, der Kathodenanschluss 18 führt im wesentlichen auf den Polleiter P zurück. Im negativen Zweig 19 ist die Kathode einer gleichen Parallelschaltung von n-Kanal-Querfeldtransistoren 20 angeschlossen, die Anode ist mit der Kathode der Parallelschaltung 17 verbunden. Die Gitteranschlüsse 21 und 22 der Transistoren 17 und 20 sind in den Unterbrechungsgliedern 23 und 24 noch auf negatives Potential bezüglich der Kathoden geshuntet, die Transistoren demzufolge gesperrt.

Im Ansteuerelektronikteil 2 wird in einem Signalgenerator 25 ein Abbild des gewünschten Idealverlaufs der Netzspannung, vorzugsweise eine Sinusform, erzeugt und mit der trägen, d.h. auf vereinzelte verzerrte Nulldurchgänge nicht ansprechenden Synchronisiervorrichtung 26 zur Netzspannung phasendeckend synchronisiert.

Das Signal geht auf einen Regelkreis, bestehend aus dem spannungsgesteuerten Verstärker 27, dem Gleichrichter mit arithmetischem Mittelwertbilder 28, dem Komparator 29, dem Grundschwingungs-Bandpass mit Gleichrichtung und arithmetischer Mittelwertbildung 30 und dem Tiefpassglied 31. Dieser Regelkreis sorgt dafür, dass am Ausgang des Verstärkers 27 eine der Grösse der Grundschwingung der Netzspannung proportionale Sinusspannung ansteht, die einer Netzspannungsänderung mit der Zeitkonstanten des Tiefpasses 31 nacheilt. Das Signal gelangt über ein Addierglied 32 auf zwei Differenzverstärker 33 und 34, in denen es mit der tatsächlichen Netzspannung verglichen wird. Ein Potentiometer 35 bzw. 36 im Differenzverstärker 33 bzw. 34 ist für die Einstellung der negativen bzw. positiven Ansprechschwelle eines Durchlassbandes vorgesehen. Bleibt die Netzspannung innerhalb dieses Durchlassbandes, so bleiben die Ausgänge der Differenzverstärker negativ. Die zwei regelbaren Gegenkopplungswiderstände 37 und 38 sind für die Einstellung der sog. Ansprechhärte vorgesehen, d.h. verlässt die tatsächliche Netzspannung das Durchlassband, so nimmt der Korrekturstrom mit zunehmender Abweichungsgrösse in einem einstellbaren Verhältnis zu. Ueber die galvanisch trennenden linearen Optokoppler 39 und 40 werden die Differenzverstärkerausgänge im wesentlichen auf die Gitter- Kathode- Strecke der Transistoren 17 und 20 gebracht. Ein Potentiometer 41 bzw. 42 sorgt für Anpassung an die Transistorkennlinie so, dass bei ungestörter Netzspannung gerade noch kein Anodenstrom fliesst.

Nach der Einschalt-Stabilisierung des Ansteuerelektronikteils 2 werden über das Verzögerungsglied 43 via Unterbrechungsglieder 23 und 24 die Gitteranschlüsse 21 und 22 freigegeben. Anschliessend wird über das Verzögerungsglied 44 und den Schalter 45 der Polleiter P auf die Transistoren geschaltet und die beschriebene Schaltung erlangt dadurch ihre prinzipielle Funktionstüchtigkeit.

Weitere Bestandteile der Schaltungsanordnung sind ein Rundsteuerfrequenzbandpass 46, dessen Ausgang amplituden- und phasenrichtig auf das Addierglied 32 gegeben wird und der in mehrfacher Ausführung für verschiedene Frequenzen vorhanden sein kann. Eine Maximalstromüberwachung 47, die vom Shunt 48 und vom Messwertumformer 49 angespeist wird, bildet ein Stromfunktionsintegral der Zeit entsprechend einer vom Transistorhersteller angegebenen Kurzzeitüberlastungskurve und betätigt bei Ueberschreiten eines Maximalwertes die Unterbrechungsglieder 23 und 24. Ferner wird über ein Totzonenglied 50 die Zeitkonstante des Tiefpass 31 mit zunehmendem Strom verkleinert, als Schutz der Transistoren gegen allzustarke eingeprägte Netzspannungssprünge.

Die Sekundärspannungen am Autotransformator 8 sind so bemessen, dass sie gleich gross sind und zwischen 50 und 150% über der Metzspannung liegen. Da die Kondensatoren 12 und 13 mit je der Kapazität C sich über die Widerstände 14 und 15 allmählich auf den Scheitelwert der Transformatorsekundärspannung $U_{\text{Trafo sek}}$ aufladen, steht für transiente Spannungsausgleichsvorgänge im Netz, wie Anlauf von Motoren etc., ein Netzstromzeitintegral von

$$\int I_{\text{eff}}\, dt = \frac{2\pi}{2\sqrt{2}}\, C\, \sqrt{2}\, (1 - \frac{2}{\pi}) U_{\text{Trafo sek}} \text{[As]}$$

zur Verfügung bevor aus dem Netz über den Transformator 8 und die Drosseln 10 und 11 starke Ladeleistung bezogen wird.

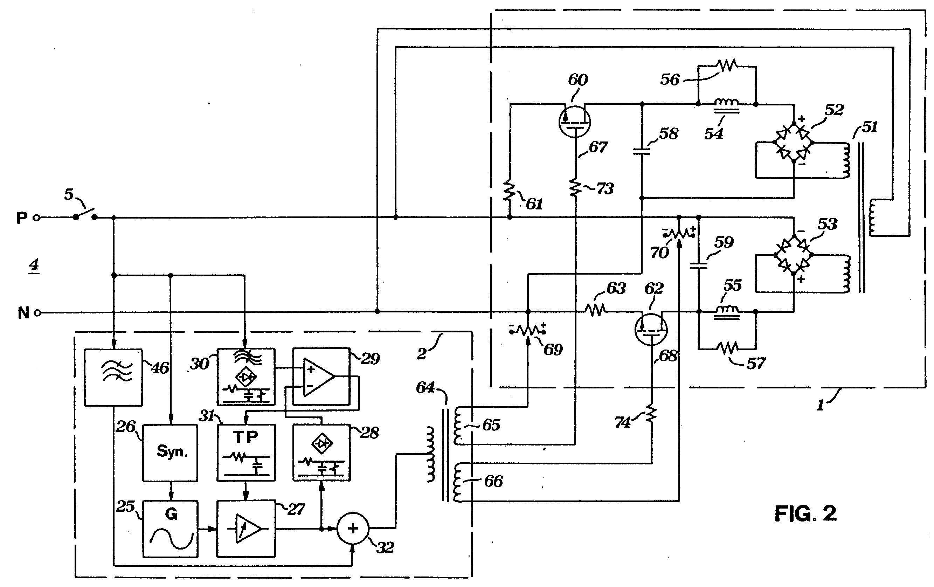

Fig. 2 zeigt eine prinzipiell anders aufgebaute Schaltungsanordnung mit demselben Verhalten am Netz wie die Schaltungsanordnung nach Fig. 1. Zum Zweck der Uebersichtlichkeit ist der Uebewachungsteil weggelassen.

Der Transformator 51 trägt zwei galvanisch getrennte Sekundärwicklungen mit denselben Spannungsverhältnissen wie im Transformator 8 von Fig. 1. Ueber den Brückengleichrichter 52 bzw. 53 und die Parallelschaltung der Drossel 54 bzw. 55 mit dem Widerstand 56 bzw. 57 wird der Kondensator 58 bzw. 59 aufgeladen. Der Kondensator 58 ist mit seinem negativen Ende an den Nulleiter N und der Kondensator 59 mit seinem negativen Ende an den Polleiter P gelegt. Der Querfeldtransistor 60 ist mit seiner Anode an das positive Ende des Kondensators 58 gelegt, seine Kathode ist über den niederohmigen Widerstand 61 an den Polleiter P angeschlossen. Der Querfeldtransistor 62 ist mit seiner Anode an das positive Ende des Kondensators 59 gelegt, seine Kathode ist über einen niederohmigen Widerstand 63 an den Nulleiter N angeschlossen.

Im Ansteuerelektronikteil 2 sitzen die aus Fig. 1 bekannten Glieder zur Aufbereitung des Grundschwingungsanteils der tatsächlichen Netzspannung und zur Aufaddierung des Rundsteuersignals. Der Transformator 64 als neues galvanisch trennendes Glied hat ein solches Uebersetzungsverhältnis, dass an seinen Sekundärwicklungen 65 und 66 die Grundschwingung der Netzspannung in Originalgrösse induziert wird.

Die Arbeitsweise der Transistoren 60 und 62 erfolgt als Kathodenfolger. Sie erhalten ihre Gitersteuerspannungen 67 bzw. 68 bezogen auf den Leiter des Netzes, an den ihre Kathode nicht angeschlossen ist, diese bei den Steuerspannungen sind zueinänder zeitlich genau um 180° verschoben. Die negative bzw. positive Ansprechschwelle des Durchlassbandes für die Netzspannung kann über das mit Gleichspannung beaufschlagte Potentiometer 69 bzw. 70 unter Berücksichtigung der Transistorkennlinie eingestellt werden. Mit den bereits erwähnten Widerständen 61 und 63 in den Transistorkathodenzuleitungen, die auch einstellbar ausgeführt sein können, wird die in der Beschreibung von Fig. 1 erklärte Ansprechhärte festgelegt.

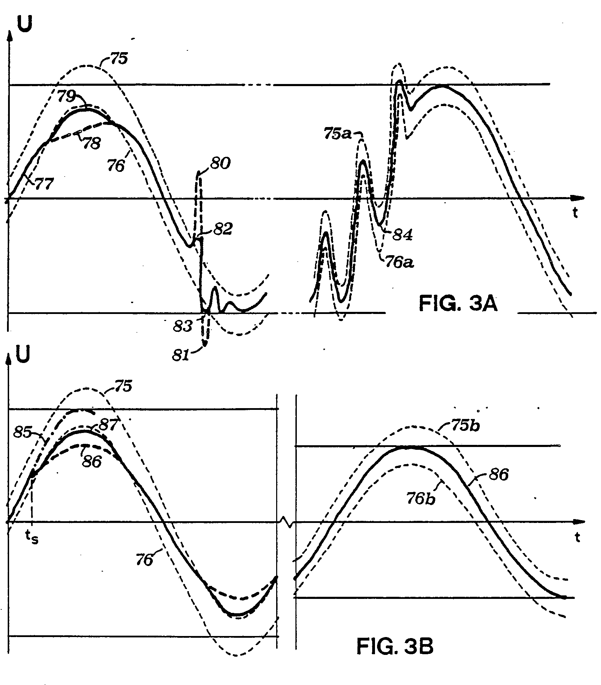

Fig. 3 verdeutlicht die prinzipielle Wirkungsweise des Ansprechverhaltens der Schaltungsanordnungen nach Fig. 1 und 2. Alle dargestellten Spannungen sind auf den Nulleiter N bezogen.

In Fig. 3A ist das Durchlassband bestehend aus der positiven Ansprechschwelle 75 und der negativen Ansprechschwelle 76 in Funktion der Zeit t dargestellt und zur besseren Veranschaulichung stark übertrieben gespreizt gezeichnet. Die Weite des Durchlassbandes wird im Bereich 1 ... 10% des Effektivwertes der Netzspannung und bevorzugt symmetrisch zur Nullinie eingestellt. Die tatsächliche Netzspannung ist durch Kurve 77 dargestellt. Bei ungestörtem Netz, d.h. wenn die tatsächliche Netzspannung innerhalb des Durchlassbandes liegt, sind die Transistoren stromlos und die Einrichtung bezieht praktisch keinen Wirkstrom aus dem Netz. Bei Verbrauchern mit Gleichrichter und Glättungskondensator am Netz kann die Netzspannung ohne Parallelbetrieb der erfindungsgemässen Einrichtung nach Kurve 78 verlaufen. Mit Parallelbetrieb wird die Netzspannung nach Kreuzen mit der negativen Ansprechschwelle 76 durch die Einrichtung gestützt, indem der Transistor 17 bzw. 60 leitend wird und aus dem Kondensator 12 bzw. 58 Strom in den Polleiter P einspeist, und sie verläuft bis zum Wiedereintritt in das Durchlassband nach Kurve 79. Die verbleibende Differenz zwischen Kurve 79 und Ansprechschwelle 76, wird durch die beschriebene Ansprechhärte bestimmt. Einzelimpulse 80, 81 werden nach Verlassen des Durchlassbandes ebenfalls auf eine durch die Ansprechhärte bestimmte Kurve 82, 83 begrenzt. Gezeigt ist ferner das Verschieben des Durchlassbandes im Takte der Rundsteuerfrequenz; die Netzspannung mit aufmodulierter Rundsteuerfrequenz 84 stösst nicht an die Ansprechschwellen 75a, 76a an.

In Fig 3B, ist die Wirkungsweise bei plözlichem und anhaltendem Einbruch der Netzspannung, z.B. durch Lastzuschaltung, im Zeitpunkt $t_s$ gezeigt. Die ursprüngliche Spannung 85 ist angedeutet, der Verlauf nach dem Zeitpunkt $t_s$ ohne Parallelbetrieb der erfindungsgemässen Einrichtung mit Kurve 86. Mit der Einrichtung wird die Netzspannung anfänglich auf den Verlauf gemäss Kurve 87 gestützt. Abklingend gemäss der Zeitkonstante des Tiefpass 31 geht die Stützwirkung allmählich zurück bis sich ein neuer Gleichgewichtszustand zwischem dem Durchlassband mit den Ansprechschwellen 75b, 76b und der Netzspannung 86 einstellt, wodurch z.B. das in der Einleitung beschriebene Flackern von Beleuchtungsanlagen verhindert wird.

Die erfindungsgemässe Einrichtung kommt bevorzugt in schwachen Netzen d.h. Netzen mit hoher Generator- und/oder Zuleitungsimpedanz zur Anwendung, vor allem, wenn in diesem Netz empfindliche Verbraucher wie Beleuchtungsanlagen, Computer etc. in Parallelbetrieb mit kurzzeitig stromstarken Verbrauchern, wie Antriebsmotoren für Wärmepumpen, Lifte etc. oder Oberschwingungserzeugern, wie elektronisch drehzahlgesteuerten Motoren betrieben werden. Der Anschluss an das Netz erfolgt in Netzknotenpunkten, in Abgangsstellen von langen Leitungen oder in unmittelbarer Nähe von empfindlichen Verbrauchern.

Das Netz braucht kein weitverzweigtes Netz im eigentlichen Sinne zu sein. Die Gesamtanordnung kann auch nur aus einem Generator und einigen wenigen Verbrauchern in konzentrierter Anordnung bestehen.

Der Idealspannungsverlauf, der im Signalgenerator 25 erzeugt wird, braucht nicht unbedingt sinusförmig zu sein. In diesem Falle ist es vorteilhaft, den Grundschwingungsbandpass in Glied 30 wegzulassen.

Drei der vorgehend für ein Einphasennetz gezeigten Schaltungsanordnungen können auch, in einer Einrichtung konzentriert, an ein Drehstromnetz in Stern- oder Dreieckschaltung angeschlossen werden, wobei gewisse Funktionen zusammengelegt und vereinfacht werden können.

Die beschriebenen Schaltungsanordnungen mit n-Kanal-Querfeldtransistoren sind nur in Niederspannungsnetzen verwendbar. Durch Anwendung leistungsfähiger Hochvakuumgitterröhren anstelle der Transistoren eröffnet sich, wegen der höheren zulässigen Anodenspannung, auch die Verwendung in Mittelspannungsnetzen bis zu einigen 10 kV Nennspannung, insbesondere auch für Bahnnetze.

Anstelle einer Speisung des Leistungselektronikteils aus dem betroffenen Netz selbst, kann in gewissen Fällen auch eine Einspeisung ab einem fremden Netz vorteilhaft sein. Anstelle der gezeigten Kondensatoren 12, 13 bzw. 58, 59 können auch Akkumulatorbatterien in Schwebeladung geschaltet sein.

Eine oder mehrere der beschriebenen erfindungsgemässen Einrichtungen können auch zur Lösung von Stabilitätsproblemen in kleineren und mittleren Netzen mit rotierenden Wechselstromgeneratoren herangezogen werden.

**Patentansprüche**

1. Einrichtung zur Filtrierung und transienten Stabilisierung der Netzspannung, welche parallel zum Netz geschaltet ist, in der die Netzspannung auf Abweichungen zu einer Idealnetzspannung untersucht und bei Ueberschreiten einer vorgebbaren maximalen Abweichung korrigiert wird, dadurch gekennzeichnet, dass in einer Schaltungsanordnung in einem Leistungselektronikteil (1) je eine niederimpedante Gleichspannungsquelle positiver (12) bzw. negativer Polarität (13) bezüglich einem ersten Leiter (N) des Netzes vorhanden ist, die Quelle positiver Polarität auf die Anode einer ersten Parallelschaltung von Leistungs- n-Kanal-Querfeldtransistoren (17) geführt ist, die Quelle negativer Polarität auf die Kathode einer gleichen zweiten Transistoranordnung (20) geführt ist, dass der Kathodenanschluss der ersten mit dem Anodenanschluss der zweiten Transistoranordnung verbunden ist, und diese Verbindung mit einem zweiten Leiter (P) des Netzes verbunden ist, dass in einem Ansteuerelektronikteil (2) in einem Signalgenerator (25) ein sinusförmiges Signal mit Netzfrequenz erzeugt wird, das von einer trägen Synchronisiervorrichtung (26) in Phasenwinkeldeckung zur Netzspannung gehalten wird, dass dieses Signal einen spannungsgesteuerten Verstärker (27) durchläuft, dessen Verstärkung durch einen Regelkreis, enthaltend ein Tiefpassglied (31) so geregelt wird, dass nach Abklingen des Aus gleichvorganges mit der Zeitkonstanten des Tiefpasses sein Ausgangssignal sich proportional zum Grundschwingungsanteil der Netzspannung verhält, dass das so erzeugte Signal auf den positiven Eingang eines ersten Differenzverstärkers (33) mit verstellbarer Gegenkopplung (37) gegeben wird, an dessen negativem Eingang die um einen bestimmten Gleichspannungsbetrag entsprechend der negativen Ansprechschwelle positiv verschobene Netzspannung anliegt, dass der Ausgang des Differenzverstärkers über ein galvanisch trennendes Glied (39) auf Gitter und Kathode der ersten Transistoranordnung gegeben wird, dass das Signal des spannungsgesteuerten Verstärkers (27) auf den negativen Eingang eines zweiten Differenzverstärkers (34) mit verstellbarer Gegenkopplung (38) gegeben wird, an dessen positivem Eingang die um einen bestimmten Gleichspannungsbetrag, entsprechend der positiven Ansprechschwelle negativ verschobene Netzspannung anliegt und dass der Ausgang dieses zweiten Differenzverstärkers in gleicher Weise auf Gitter und Kathode der zweiten Transistoranordnung gegeben wird.

2. Einrichtung zur Filtrierung und transienten Stabilisierung der Netzspannung, welche parallel zum Netz geschaltet ist, in der die Netzspannung auf Abweichungen zu einer Idealnetzspannung untersucht und bei Ueberschreiten einer vorgebbaren maximalen Abweichung korrigiert wird, dadurch gekennzeichnet, dass in einer Schaltungsanordnung in einem Leistungselektronikteil (1) eine erste von zwei niederimpedanten Gleichspannungsquellen (58) mit ihrem Minuspol mit einem ersten Leiter (N) des Netzes und mit dem Pluspol mit der Anode einer ersten Parallelschaltung von Leistungs- n-Kanal- Querfeldtransistoren (60) verbunden ist, dass die Kathode dieser ersten Transistoranordnung über ein niederohmiges Widerstandselement (61) mit einem zweiten Leiter (P) des Netzes verbunden ist, dass die zweite Quelle (59) mit ihrem Minuspol mit dem zweiten Leiter (P) verbunden ist und mit dem Pluspol mit der Anode einer gleichen zweiten Transistoranordnung (62) verbunden ist, dass die Kathode dieser zweiten Transistoranordnung über ein niederohmiges Widerstandselement (63) mit dem ersten Leiter (N) des Netzes verbunden ist, dass in einem Ansteuerelektronikteil (2) in einem Signalgenerator (25) ein sinusförmiges Signal mit Netzfrequenz erzeugt wird, das von einer trägen Synchronisiervorrichtung (26) in Phasenwinkeldeckung zur Netzspannung gehalten wird, dass dieses Signal einen spannungsgesteuerten Verstärker (27) durchläuft, dessen Verstärkung durch einen Regelkreis, enthaltend ein Tiefpassglied (31) so geregelt wird, dass nach Abklingen des Ausgleichsvorganges mit der Zeitkonstanten des Tiefpasses sein Ausgangssignal sich proportional zum Grundschwingungsanteil der Netzspannung verhält, dass das so erzeugte Signal dermassen auf einen Transformator (64) gekoppelt wird, dass an den beiden identischen Sekundärwicklungen (65) und (66) der Grundschingungsanteil der Netzspannung in Originalgrösse induziert wird, dass die beiden Sekundärwicklungen (65, 66) um 180° phasenverschoben an je ein Gitter (67 bzw. 68) der Transistoranordnungen geführt sind und die zwei andern Enden der Sekundärwicklungen mit einstellbaren Gleichspannungsverschiebungen (69 bzw. 70) entsprechend positiver und negativer Ansprechschwelle je an den transistorfernen Netzanschluss (N bzw. P) geführt sind.

3. Einrichtung nach Anspruch 1 oder 2, dadurch gekennzeichnet, dass im Regelkreis die Netzspannung einen Grundschwingungsbandpass mit anschliessender Gleichrichtung und arithmetischer Mittelwertbildung (30) durchläuft und anschliessend auf den positiven Eingang eines Komparators (29) gegeben wird, dass das Signal vom Ausgang des spannungsgesteuerten Verstärkers (27) einen Gleichrichter mit anschliessender arithmetischer Mittelwertbildung (28) durchläuft und anschliessend auf den negativen Eingang des Komparators gegeben wird, dass der Ausgang des Komparators über ein Tiefpassglied (31) auf den Steuereingang des spannungsgesteuerten Verstärkers gegeben wird und dass diese Verstärkung mit wachsendem Steuerpotential zunimmt.

4. Einrichtung nach Anspruch 1 oder 2, dadurch gekennzeichnet, dass die im Signalgenerator (25) erzeugte Spannung von der Sinusform abweicht und der gewünschten Idealform der Netzspannung entspricht.

5. Einrichtung nach Anspruch 1 oder 2, dadurch gekennzeichnet, dass über einen oder mehrere Rundsteuerfrequenz- Bandpässe (46) das Rundsteuersignal auf den Ausgang des spannungsgesteuerten Verstärkers (27) mit dem Addierglied (32) zugegeben wird.

6. Einrichtung nach Anspruch 1 oder 2, dadurch gekennzeichnet, dass die niederimpedanten Gleichspannungsquellen Kondensatorbatterien in Serie- und Parallelschaltung sind, diese über Transformator, Gleichrichter und Drosselspule-Widerstand- Parallelschaltung mit einer Einschaltstrombegrenzung (6), (7) aus dem nämlichen Netz gespeist werden, und dass die Kondensatoren im unbelasteten Betrieb über die Widerstände auf eine Spannung des 1,5 bis 2,5-fachen Scheitelwertes der Netzspannung aufgeladen sind.

7. Einrichtung nach Anspruch 6, dadurch gekennzeichnet, dass die kürzeste auftretende Entladezeit der Kondensatoren bei maximalem benötigtem Netzkorrekturstrom immer noch grösser bleibt als die Zeitkonstante des Tiefpasses (31).

8. Einrichtung nach Anspruch 1 oder 2, dadurch gekennzeichnet, dass die niederimpedanten Gleichspannungsquellen Akkumulatorenbatterien sind, die über Transformator, Gleichrichter und Ladestromregler in Schwebeladung aus dem nämlichen Netz gespeist werden und dass die Akkumulator-Nennspannung einen Wert des 0,9 bis 1,5-fachen Netzspannungsscheitelwertes aufweist.

9. Einrichtung nach Anspruch 1 oder 2, dadurch gekennzeichnet, dass in einem Ueberwachungsteil (3) eine Einschaltverzögerung (44) die Netzspannung erst dann auf die Transistoranordnungen schaltet, wenn die niederimpedanten Gleichspannungsquellen ihre Endladespannung erreicht haben und der Ansteuerelektronikteil 2 stabil läuft, und dass ein Stromsensor (49) den Netzkorrekturstrom überwacht und

a) bei Ueberschreiten eines Grenzwertes im Glied (50) die Zeitkonstante des Tiefpasses (31) stark verkleinert

b) bei Ueberschreiten eines vorgegebenen Stromfunktion-Zeitintegrals die Gitteransteuerung mit den Unterbrechungsgliedern (23, 24) unterbricht.

10. Einrichtung nach Anspruch 1 oder 2, dadurch gekennzeichnet, dass in Drehstromnetzen drei identische Schaltungsanordnungen in Stern oder Dreieck geschaltet sind.

11. Einrichtung nach Anspruch 1 oder 2, dadurch gekennzeichnet, dass anstelle der n-Kanal- Querfeldtransistoren andere trägheitslos steuerbare elektronische Bauelemete, insbesondere Hochvakuum- Gitterröhren verwendet werden.

12. Einrichtung nach Anspruch 1, dadurch gekennzeichnet, dass das Ansteuersignal auf den Gitteranschluss, nach der galvanischen Trennung, der Kennlinie des Bauelementes so angepasst wird, dass im ungestörten Betriebsfall gerade noch kein Anodenstrom fliesst.

**Revendications**

1. Installation de filtrage et de stabilisation transitoire de la tension de réseau, étant montée en parallèle au réseau, dans laquelle la tension de réseau est analysée pour détecter des déviations par rapport à une tension de réseau idéale et corrigée si elle dépasse une valeur maximale prédéfinie, caractérisée en ce que dans un dipositif de circuits, dans une partie électronique de puissance (1), une source de tension continue à faible impédance à polarité positive (12) et une source à polarité négative (13) par rapport à un premier conducteur (N) du réseau sont présentes, la source de polarité positive étant conduite vers l'anode d'un premier montage en parallèle de transistors de puissance à effet de champ canal n (17), la source de polarité négative étant conduite vers la cathode d'un deuxième montage à transistors identiques (20), que la connexion de la cathode du premier étant reliée à la connexion de l'anode du second montage à transistors et que cette liaison étant connectée avec un deuxième conducteur (P) du réseau; en ce que dans une partie de commande (2) un signal sinusoïdale à la fréquence de réseau est généré d'un générateur de signaux (25), le signal étant maintenu en couverture de l'angle de phase par rapport à la tension de réseau par un élément de synchronisation temporisé (26), que ce signal traverse un amplificateur commandé en tension (27), dont l'amplification est régulée par un circuit de réglage contenant un élément passe-bas (31), si bien qu'après l'écoulement de la phase d'équilibrage avec la constante de temps du passe-bas, son signal de sortie varie proportionnellement à la part d'oscillation fondamentale de la tension de réseau, que le signal ainsi généré est fourni à l'entrée positive d'un premier amplificateur différentiel (33) à contre-réaction réglable (37), sur l'entrée négative duquel est appliqué la tension de réseau, positive décalée d'une certaine valeur de tension continue correspondante au seuil de réponse négatif, que la sortie de l'amplificateur différentiel est fournie par l'intermédiaire d'un élement séparant galvaniquement (39) à la grille et à la cathode du premier montage à transistors, que le signal de l'amplificateur commandé en tension (27) est fourni à l'entrée négative d'un deuxième amplificateur différentiel (34) à contre-réaction réglable (38), sur l'entrée positive duquel est appliqué la tension de réseau, négative décalée d'une certaine valeur de tension continue correspondante au seuil de réponse positif et que la sortie de ce deuxième amplificateur différentiel est fournie de la même façon à la grille et à la cathode du deuxième montage à transistors.

2. Installation de filtrage et de stabilisation transitoire de la tension de réseau, étant montée en parallèle au réseau, dans laquelle la tension de réseau est analysée pour détecter des déviations par rapport à une tension de réseau idéale et corrigée si elle dépasse une valeur maximale prédéfinie, caractérisée en ce que dans un dispositif de circuits, dans une partie électronique de puissance (1), la première de deux sources de tension continue à faible impédance (58) est reliée par son pôle négatif à un premier conducteur (N) du réseau et par son pôle positif à l'anode d'un premier montage en parallèle de transistors de puissance à effet de champ canal n (60), la cathode de ce premier montage à transistors étant reliée par un élément de résistance faible (61) à un second conducteur (P) du réseau, la deuxième source (59) étant reliée par son pôle négatif au second conducteur (P) et par son pôle positif à l'anode d'un deuxième montage à transistors (62) identique, la cathode de ce deuxième montage à transistors étant reliée par un élement de résistance faible (63) au premier conducteur (N) du réseau; en ce que dans une partie de commande (2) un signal sinusoïdale à la fréquence de réseau est généré d'un générateur de signaux (25), le signal étant maintenu en couverture de l'angle de phase par rapport à la tension de réseau par un élément de synchronisation temporisé (26), que ce signal traverse un amplificateur commandé en tension (27), dont l'amplification est régulée par un circuit de réglage contenant un élément passe-bas (31), si bien qu'après l'écoulement de la phase d'équilibrage avec la constante de temps du passe-bas, son signal de sortie varie proportionnellement à la part d'oscillation fondamentale de la tension de réseau, que le signal ainsi généré est couplé avec un transformateur (64) de telle manière que sur les deux enroulements secondaires identiques (65) et (66), la part d'oscillation fondamentale de la tension de réseau induite est produite en amplitude originale, que les deux enroulements (65, 66) sont conduits chacun vers une grille (67, respectivement 68) des montages à transistors avec un déphasage de 180°, et que les deux autres extrémités des deux enroulements secondaires sont conduites avec des décalages de tension continue (69, respectivement 70) ajustables correspondants au seuil de réponse positif et négatif sur le conducteur du réseau (N, respectivement P) éloigné du transistor.

3. Installation selon la revendication 1 ou 2, caractérisée en ce que dans le circuit de réglage, la tension de réseau traverse un passe-bande d'oscillation fondamentale, suivi d'un redressement et de la constitution de la moyenne arithmétique (30), avant d'être fournie à l'entrée positive d'un comparateur (29), en ce que le signal provenant de la sortie de l'amplificateur commandé en tension (27) traverse un redresseur avec formation de la moyenne arithmétique (28) et qu'ensuite celui-ci est fourni à l'entrée négative du comparateur, en ce que la sortie du comparateur est fournie à l'entrée de commande de l'amplificateur commandé en tension par l'intermédiaire d'un élement passe-bas (31), et que cette amplification augmente proportionnellement au potentiel de commande.

4. Installation selon la revendication 1 ou 2, caractérisée en ce que la tension produite dans le générateur de signaux (25) s'écarte de la forme sinusoïdale et correspond à la forme idéale souhaitée pour la tension de réseau.

5. Installation selon la revendication 1 ou 2, caractérisée en ce que le signal de télécommande centralisée est fourni à la sortie de l'amplificateur commandé en tension (27) avec l'additionneur (32) par l'intermédiaire d'un ou de plusieurs passe-bande de télécommande centralisée (46).

6. Installation selon la revendication 1 ou 2, caractérisée en ce que les sources de tension continue à faible impédance sont des batteries de condensateurs montées en série et en parallèle, celles-ci étant alimentées par le même réseau par un transformateur, un redresseur et un montage en parallèle d'une self et d'une résistance avec une limitation de courant de démarrage (6), (7), et en ce que les condensateurs sont chargés en fonctionnement à vide par les résistances à une tension correspondante à 1,5 à 2,5 fois la valeur de crête de la tension de réseau.

7. Installation selon la revendication 6, caractérisée en ce que le temps de décharge des condensateurs le plus court qui puisse apparaître lors des courants de correction du réseau maximales nécessaires, reste malgré tout plus long que la constante de temps du passe-bas (31).

8. Installation selon la revendication 1 ou 2, caractérisée en ce que les sources de tension continue à faible impédance sont des batteries d'accumulateurs qui sont alimentées par le même réseau et qui sont maintenues en charge de suspension par un transformateur, un redresseur et un régulateur de courant de charge, et en ce que la tension nominale des accumulateurs a une valeur égale à 0,9 à 1,5 fois la valeur de crête de la tension de réseau.

9. Installation selon la revendication 1 ou 2, caractérisée en ce que dans une partie de surveillance (3), un retard à l'enclenchement (44) ne commute la tension de réseau sur les montages à transistors que lorsque les sources de tension continue à faible impédance ont atteint leur tension de charge finale et que la partie de commande (2) tourne de façon stable, et qu'un capteur de courant (49) surveille le courant de correction du réseau et

a) en cas de dépassement d'une valeur-limite dans l'élement (50), la constante de temps du passe-bas (31) est considérablement diminuée,

b) en cas de dépassement d'une intégrale de temps de fonction de courant prédéfinie, la commande des grilles est interrompue par les éléments d'interruption (23, 24).

10. Installation selon la revendication 1 ou 2, caractérisée en ce que sur les réseaux triphasés, trois dispositifs de circuits identiques sont montés en étoile ou en triangle.

11. Installation selon la revendication 1 ou 2, caractérisée en ce que d'autres composants électroniques à commande sans inertie, en particulier des tubes électroniques à grille et à bon vide, sont utilisés à la place des transistors à effet de champ canal n.

12. Installation selon la revendication 1, caractérisée en ce qu'après la séparation galvanique, le signal de commande à la grille est adapté à la courbe caractéristique du composant ainsi qu'en cas de fonctionnement sans distorsion le courant anodique ne passe justement pas.

**Claims**

1. Installation for the filtering and transitory stabilization of the mains voltage, connected in parallel to the mains, in which the mains voltage is checked for deviations in respect to an ideal mains voltage and corrected on exceeding a definable maximum deviation, characterized in that, in a circuit arrangement in a power electronics block (1), a low impedance d.c. voltage source is provided, having positive (12) and negative polarity (13) in respect to a first mains conductor (N), the positive polarity source being connected to the anode of a first parallel grouping of n-channel field-effect power transistors (17) and the negative polarity source being connected to the cathode of an identical second transistor arrangement (20), that the cathode terminal of the first transistor arrangement is connected to the anode terminal of the second and this connection being connected to a second mains conductor (P), that in a control electronics block (2), a signal generator (25) produces a sinusoidal signal at mains frequency which is maintained in-phase with the mains voltage by a slow-acting synchronizing device (26), that this signal passes through a voltage-controlled amplifier (27), whose gain is so regulated by a control loop containing a low-pass element (31), that after the decaying of the transitory phenomenon with the time constant of the low-pass, its output signal is proportional to the fundamental component of the mains voltage, that the signal thus produced is applied to the positive input of a first differential amplifier (33) with adjustable negative feedback (37), at whose negative input is applied the mains voltage, positively displaced by a certain d.c. voltage value corresponding to the negative response threshold, that the output of the differential amplifier is applied via an electrical isolating element (39) to grid and cathode of the first transistor arrangement, that the signal from the voltage-controlled amplifier (27) is applied to the negative input of a second differential amplifier (34) with adjustable negative feedback (38), at whose positive input is applied the mains voltage, negatively displaced by a certain d.c. voltage value corresponding to the positive response threshold, and that the output of this second differential amplifier is applied in the same manner to grid and cathode of the second transistor arrangement.

2. Installation for the filtering and transitory stabilization of the mains voltage, connected in parallel to the mains, in which the mains voltage is checked for deviations in respect to an ideal mains voltage and corrected on exceeding a definable maximum deviation, characterized in that, in a circuit arrangement in a power electronics block (1), a first of two low impedance d.c. voltage sources (58) is connected with its negative pole to a first mains conductor (N) and with the positive pole to the anode of a first parallel grouping of n-channel field-effect power transistors (60), that the cathode of this first transistor arrangement is connected via a low-resistance resistor element (61) to a second mains conductor (P), that the second source (59) is connected with its negative pole to the second conductor (P) and with the positive pole to the anode of an identical second transistor arrangement (62), that the cathode of this second transistor arrangement is connected to the first mains conductor (N) via a low resistance resistor element (63), that in a control electronics block (2), a signal generator (25) produces a sinusoidal signal at mains frequency which is maintained in-phase with the mains voltage by a slow-acting synchronizing device (26), that this signal passes through a voltage-controlled amplifier (27), whose gain is so regulated by a control loop, containing a low-pass element (31), that after the decaying of the transitory phenomenon with the time constant of the low-pass, its output signal is proportional to the fundamental component of the mains voltage, that the signal thus produced is so coupled to a transformer (64) that the fundamental component of the mains voltage is induced in its original magnitude in the two identical secondary windings (65) and (66), that the two secondary windings (65, 66) are applied phase displaced by 180° each to a grid (67 resp. 68) of the transistor arrangements and the other two ends of the secondary windings with adjustable d.c. voltage displacements (69 resp. 70) corresponding to the positive and negative response thresholds are connected each to the transistor-remote terminal of the mains (N resp. P).

3. Installation according to claim 1 or 2, characterized in that in the control loop, the mains voltage passes through a fundamental band-pass with following rectification and arithmetic averaging (30), subsequently being applied to the positive input of a comparator (29), that the signal from the output of the voltage-controlled amplifier (27) passes through a rectifier with following arithmetic averaging (28), subsequently being applied to the negative input of the comparator, that the output of the comparator is taken via a low-pass element (31) to the control input of the voltage-controlled amplifier whose gain increases with increasing control potential.

4. Installation according to claim 1 or 2, characterized in that the voltage produced in the signal generator (25) deviates from the sinusoidal and corresponds to the ideal mains voltage form.

5. Installation according to claim 1 or 2, characterized in that the ripple control signal is applied to the output of the voltage-controlled amplifier (27) with adding element (32) via one or more ripple control frequency band-pass filters (46).

6. Installation according to claim 1 or 2, characterized in that the low impedance d.c. voltage sources are banks of capacitors connected in series and parallel, these being supplied from the said mains via transformer, rectifier and choke-resistor parallel circuit with inrush current limiter (6), (7), and that the capacitors in off-load state are charged via the resistors to 1.5 to 2.5 times the mains voltage amplitude.

7. Installation according to claim 6, characterized in that the shortest occurring capacitor discharge time with maximum mains correcting current is still greater than the time constant of the low-pass (31).

8. Installation according to claim 1 or 2, characterized in that the low impedance d.c. voltage sources are accumulator batteries, which are float charged from the said mains via transformer, rectifier and charging current regulator, and that the accumulator rated voltage has a value of 0.9 to 1.5 times the mains voltage amplitude.

9. Installation according to claim 1 or 2, characterized in that in a monitoring block (3), a turn-on delay (44) does not switch the mains voltage to the transistor arrangements until the low impedance d.c. voltage sources have attained their ultimate charging voltage and control electronics block (2) is running in a stable fashion and that a current sensor (49) monitors the mains correcting current and

a) greatly reduces the time constant of the low-pass on the exceeding of a limit in element (50)

b) interrupts the grid control with breaking elements (23, 24) when a predefined current function time integral is exceeded.

10. Installation according to claim 1 or 2, characterized in that in three-phase networks, three identical circuit configurations are connected in star or delta fashion.

11. Installation according to claim 1 or 2, characterized in that other fast acting controllable electronic components are used in place of n-channel field-effect transistors, in particular grid-controlled high-vacuum tubes.

12. Installation according to claim 1, characterized in that the control signal on the grid terminal, after the electrical isolating element, is matched according to component characteristic so that just no anode current flows during undisturbed operation.

FIG. 1

FIG. 2

FIG. 3A

FIG. 3B